# FASCICULE DE BREVET EUROPEEN

(11) **EP 1 060 987 B1**
(45) Date de publication et mention de la délivrance du brevet: **06.08.2003**
(21) Numéro de dépôt: 00401548.3
(22) Date de dépôt: 31.05.2000
(51) Int. Cl.: B64D 1/06, B60N 3/06

(54) **Repose-jambes pour siège, notamment d'avion**
Beinstützvorrichtung fur einen Flugzeugsitz
Leg rest assembly for an aircraft seat

(30) Priorité: 15.06.1999 FR 9907586
(43) Date de publication de la demande: 20.12.2000
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Marais, Joel, 18290 Charost (FR)
(74) Mandataire: Keib, Gérard

(56) Documents cités:
- FR-A- 2 744 075
- US-A- 5 352 020

## Description

La présente invention concerne un repose-jambes pour siège, notamment d'avion.

Il est bien connu que certains sièges sont munis d'un repose-pied, pour le confort de l'utilisateur. On connaît également des sièges comprenant des repose-jambes, notamment des sièges d'avion ou des sièges de repos, pour améliorer le confort en assurant un soutien des mollets de l'utilisateur. Un repose-jambes selon le préambule de la revendication 1 est connu du document US-A-5 352 020.

Il n'existe toutefois pas à l'heure actuelle de sièges munis de dispositifs permettant un réglage simple et commode d'un tel repose-jambes.

La présente invention vise à pallier cet inconvénient.

A cet effet, l'invention a pour objet un repose-jambes pour siège, notamment d'avion, comprenant
- un corps comportant une surface d'appui généralement plane ;
- des moyens de pivotement pour monter le corps pivotant autour du bord avant de l'assise du siège, de manière que la surface de l'assise du siège et la surface d'appui du corps forment un dièdre d'ouverture variable ;
- des moyens de prolongement mobiles depuis une position escamotée jusqu'à des positions dépliées pour prolonger le corps de façon réglable de son côté opposé aux moyens de pivotement ;
caractérisé par le fait qu'il comprend
- un volet roulant ; et
- des moyens de guidage pour déployer le volet roulant lorsque les moyens de prolongement mobiles sont dépliés de sorte que le volet vienne dans le prolongement de la surface d'appui du corps du repose-jambes.

Ainsi, le corps du repose-jambes et les moyens de prolongement se comportent comme des éléments télescopiques permettant de faire varier la longueur du repose-jambes.

Au cours de cette variation de longueur, la surface du volet roulant vient prolonger la surface d'appui du corps du repose-jambes pour l'adapter à la longueur des jambes de l'utilisateur.

On observera que ce ne sont pas nécessairement les moyens de prolongement qui, lorsqu'ils sont étendus, provoquent le déploiement du volet roulant. Ce peut être au contraire le volet roulant qui commande les mouvements des moyens de prolongement.

On observera également que la surface d'appui du corps du repose-jambes peut être constituée par une partie fixe du volet roulant.

Dans un mode de réalisation particulier de l'invention, les moyens de prolongement mobiles forment un cadre sensiblement en forme de U, avec la base du U sensiblement parallèle au bord de l'assise du siège et dirigée, par rapport au corps du repose-jambes, à l'opposé de l'assise du siège.

Egalement dans un mode de réalisation particulier, le volet roulant comprend une pluralité de lattes articulées entre elles.

Ces lattes peuvent être réalisées à partir d'un profilé en alliage léger ou par extrusion de matière plastique.

Egalement dans un mode de réalisation particulier, les moyens de guidage comprennent des pistes de guidages agencées pour coopérer avec des organes de guidage disposés latéralement sur le volet roulant.

Plus particulièrement, les lattes peuvent être creuses et les organes de guidage peuvent former des bouchons d'extrémité pour les lattes.

Plus particulièrement également, les organes de guidage peuvent être des organes de friction à section longitudinale sensiblement en forme d'osselets.

On observera que cette dernière caractéristique, facilitant le passage du volet roulant dans des courbes, peut être utilisée dans toute sorte de volet roulant, quelle que soit son application.

Tout moyen convenable peut être prévu pour l'articulation des lattes, mais on prévoit de préférence de les emboîter de manière qu'elles soient articulées entre elles au moyen de nervures transversales, cylindriques et concentriques, coopérantes.

Plus particulièrement, les axes des nervures peuvent être situés dans le plan extérieur de support des lattes.

Ces dernières dispositions pour l'articulation des lattes peuvent d'ailleurs être également mises en oeuvre dans tout volet roulant, indépendamment de son utilisation.

Dans un mode de réalisation particulier, l'une des extrémités longitudinales du volet roulant est fixe par rapport au corps du repose-jambes, à proximité du bord du repose-jambes opposé à l'assise du siège, le volet roulant étant agencé pour se déployer à partir de cette extrémité.

Plus particulièrement, le volet roulant peut être stocké sous le corps du repose-jambes avec chacun de ses bords latéraux engagé dans une piste de guidage sensiblement en forme de U solidaire des moyens de prolongement mobiles, la base du U étant dirigée par rapport au corps du repose-jambes à l'opposé à l'assise du siège.

Dans un autre mode de réalisation particulier, l'une des extrémités longitudinales du volet roulant est fixe par rapport aux moyens de prolongement mobiles, le volet roulant étant agencé pour se déployer entre cette extrémité et le bord du repose-jambes opposé à l'assise du siège.

Dans ce dernier mode de réalisation, le volet roulant peut être stocké sous le corps du repose-jambes avec chacun de ses bords latéraux engagé dans une piste de guidage sensiblement en forme de U solidaire du corps du repose-jambes, la base du U étant dirigée par rapport au corps du repose-jambes du côté de l'assise du siège.

Egalement dans ce dernier mode de réalisation, le volet roulant peut en variante être stocké partiellement sous le corps du repose-jambes et partiellement sous l'assise du siège, avec chacun de ses bords latéraux engagé dans une piste de guidage solidaire en partie du corps du repose-jambes et en partie de l'assise du siège.

Dans un mode de réalisation particulier de l'invention le repose-jambes comprend des moyens de solidarisation pour solidariser le corps du repose-jambes et les moyens de prolongement.

Les moyens de solidarisation peuvent plus particulièrement comprendre une tige dont une extrémité est solidaire des moyens de prolongement, et des moyens de blocage de la tige solidaires du corps du repose-jambes

Avantageusement, les moyens de blocage comprennent deux organes de blocage articulés et munis de trous de passage pour la tige, et des moyens élastiques agencés pour désaligner les trous de passage.

Dans un mode de réalisation particulier, le repose-jambes selon l'invention comprend des glissières complémentaires solidaires respectivement du corps de repose-jambes et des moyens de prolongement mobiles, pour un mouvement relatif du corps de repose-jambes et des moyens de prolongement mobiles

Egalement dans un mode de réalisation particulier, des moyens de rappel sont prévus pour rappeler les moyens de prolongement mobiles vers leur position escamotée.

Ces moyens de rappel peuvent notamment comprendre au moins un câble élastique dont une extrémité est solidaire du corps du repose-jambes et l'autre extrémité est solidaire des moyens de prolongement.

Plus particulièrement, on peut prévoir au moins une poulie solidaire des moyens de prolongement et dans lequel passe le câble élastique.

L'invention a également pour objet un siège d'avion comprenant un repose-jambes tel que décrit ci-dessus.

L'invention sera bien comprise à la lecture de la description qui va suivre.

La figure 1 est une vue en perspective de dessous d'un repose-jambes selon l'invention, dans laquelle les garnitures extérieures n'ont pas été représentées.

Les figure 2a, 2b et 2c illustrent schématiquement le fonctionnement d'un repose-jambes selon un premier mode de réalisation de l'invention.

Les figure 3a et 3b illustrent schématiquement le fonctionnement d'un repose-jambes selon un deuxième mode de réalisation de l'invention.

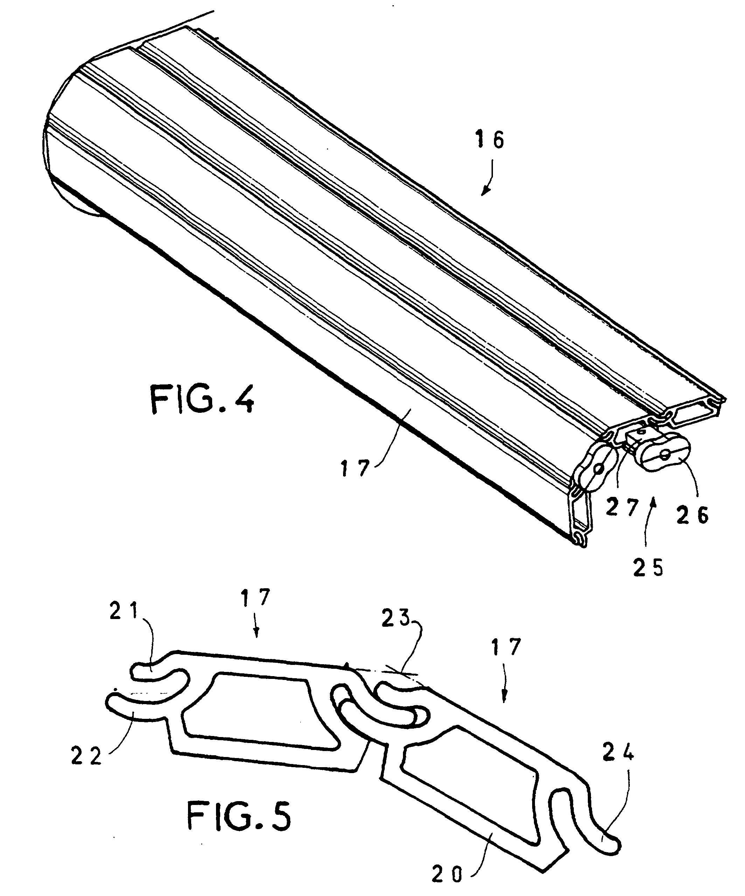

La figure 4 est une vue en perspective du volet roulant partiellement démonté.

La figure 5 est une vue en coupe à plus grande échelle de deux lattes du volet roulant, emboîtées.

La figure 6 est une vue en coupe transversale du volet roulant et de son mécanisme de guidage.

La figure 7 est une vue de côté du mécanisme de guidage.

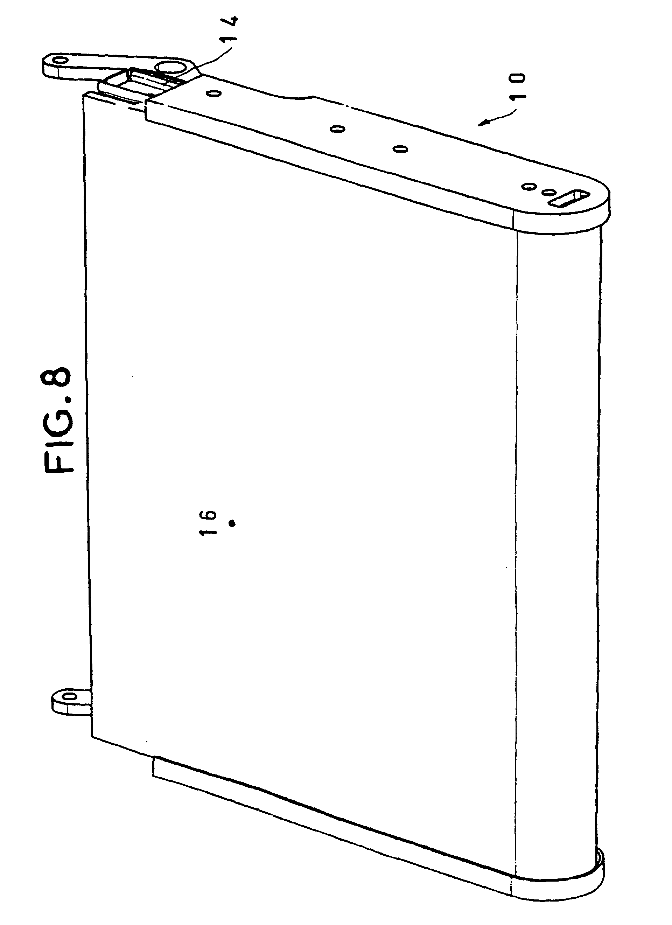

La figure 8 est une vue en perspective de dessus correspondant à la figure 6.

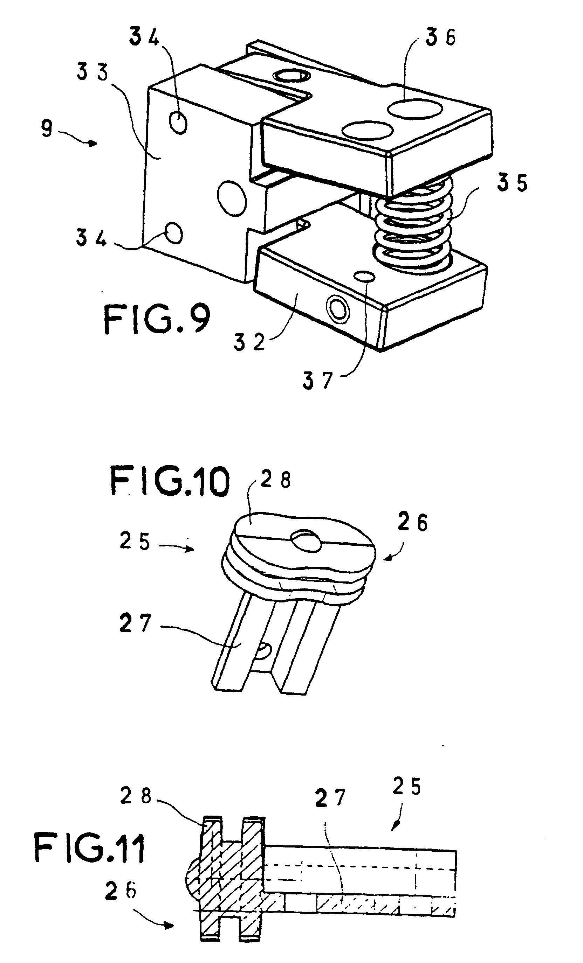

La figure 9 est une vue en perspective des moyens de blocage.

La figure 10 est une vue en perspective d'un organe de guidage du volet roulant.

La figure 11 est une vue en coupe de cet organe de guidage.

Les figures 12 et 13 représentent schématiquement un siège d'avion comportant un repose jambes selon l'invention.

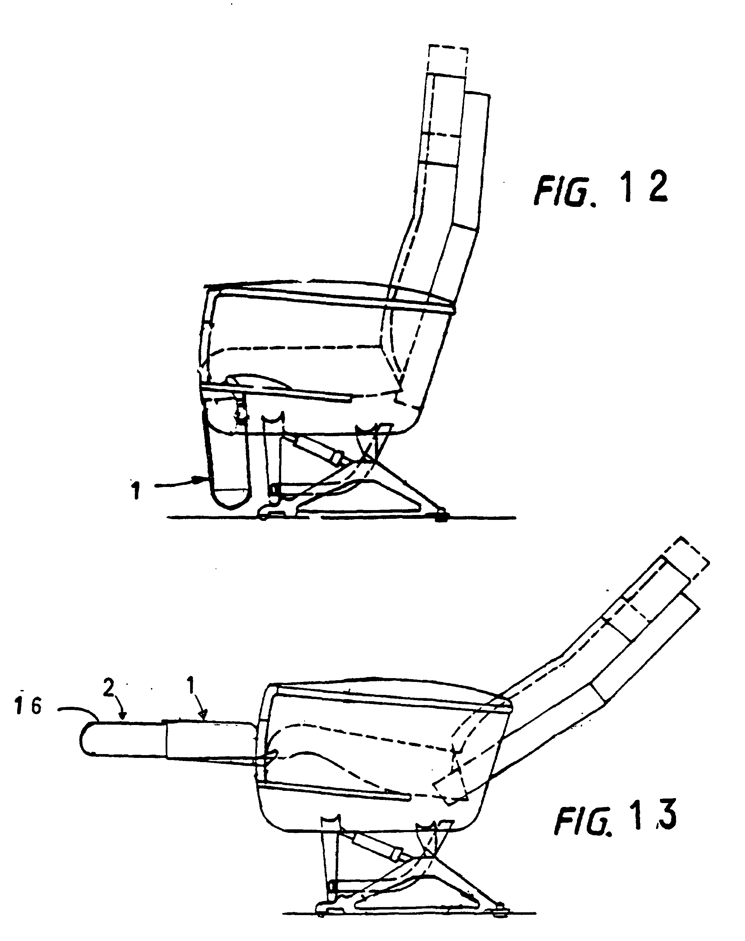

Le repose jambes est en position « rentrée » sur la figure 12, et en position « sortie » sur la figure 13.

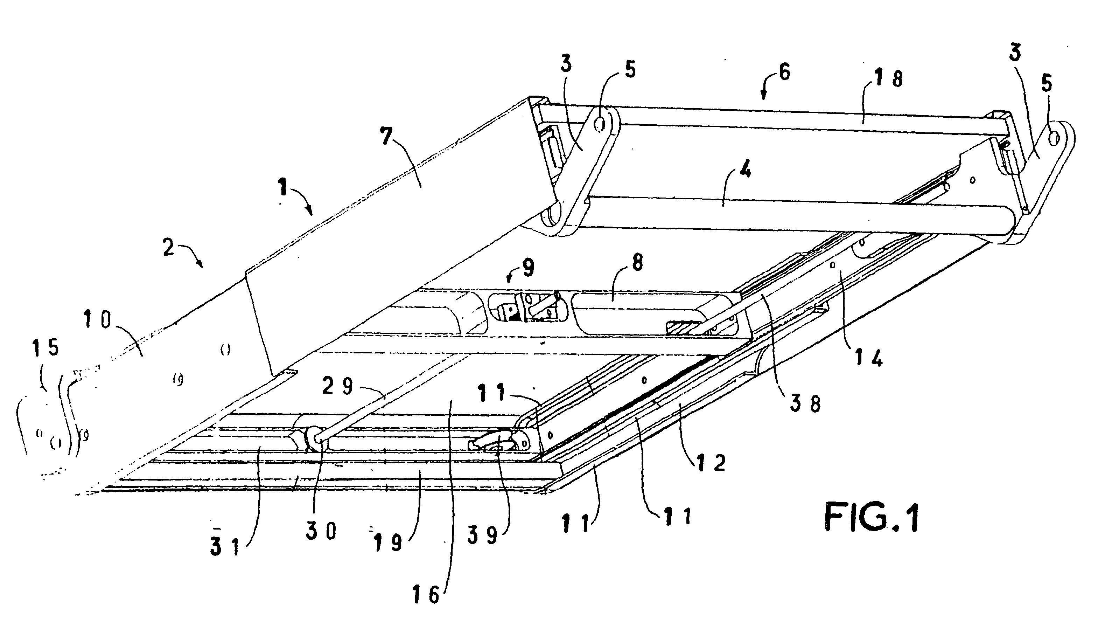

On voit à la figure 1 un repose-jambes composé pour l'essentiel d'un corps 1 de repose-jambes et d'un prolongement 2. Le prolongement 2 est monté sur le corps 1 coulissant en translation de façon télescopique par des moyens qui seront décrits ci-après.

Le corps 1 est monté pivotant sur la structure du siège (non représentée), autour d'un axe sensiblement confondu avec le bord avant de l'assise du siège. A cet effet, le corps 1 est muni de deux ferrures 3 reliées par un tube 4 et comportant des trous de montage 5 coaxiaux pour le passage des arbres de pivotement.

Le pivotement du corps est obtenu par tout moyen convenable tel qu'un vérin mécanique ou électromécanique dont le corps est monté sur la structure du siège et dont la tige est reliée à une partie du corps 1 du repose-pied.

Le corps 1 est composé en outre d'une surface d'appui 6 généralement plane, de joues latérales en tôle 7, et d'une traverse 8 de support d'un mécanisme de blocage 9 qui sera décrit ci-après.

Le prolongement 2 comprend essentiellement deux supports latéraux 10 de volet roulant. Chaque support est généralement plan et disposé dans un plan vertical. Chaque support comporte deux nervures parallèles 11 en saillie vers l'intérieur pour délimiter une piste de guidage 12 orientée vers le plan médian du repose-jambes.

Chaque nervure 11, et donc chaque piste de guidage 12, possède une forme de U dont les branches sont sensiblement horizontales et dont la concavité est tournée vers le siège, c'est-à-dire que la base du U est dirigée à l'opposé du corps de repose-jambes.

Chaque support latéral 10 reçoit en outre sur sa face intérieure un élément de glissière 13 apte à coopérer avec un élément de glissière 14 solidaire du corps 1 de repose-jambes pour permettre le coulissement relatif du prolongement 2 par rapport au corps de repose-jambes. Les éléments de glissière 13 et 14 sont par exemple du type utilisé dans l'industrie de l'ameublement pour former les glissières à billes de montage des tiroirs de meubles. Des butées convenables sont prévues pour limiter le mouvement du prolongement 2.

Enfin, un repose-pied 15 est monté à l'extrémité des supports 10, pivotant entre une position repliée représentée à la figure 1 et une position d'utilisation.

Un volet roulant 16 assure la continuité de la surface d'appui 6 lorsque le prolongement 2 se déplie télescopiquement. Ici, en fait, c'est une partie d'extrémité fixe du volet roulant 16 qui forme la surface d'appui 6.

Le volet roulant 16 est formé de lattes 17 emboîtées et articulées identiques, à l'exception de la latte d'extrémité fixe 18 solidaire du corps 1 de repose-jambes et de l'autre latte d'extrémité 19.

Chaque latte courante 17 est formé d'un profilé creux 20 dont font saillie trois nervures cylindriques d'articulation. Deux de ces nervures 21 et 22 sont issues d'un des côtés du profilé 20 et sont concentriques, avec un axe 23 situé dans le plan de la surface supérieure du profilé 20. L'autre nervure 24 a également pour axe un point situé dans le plan de la surface supérieure du profilé et a sa ligne moyenne à une distance de l'axe 23 intermédiaire de celles des nervures 21 et 22.

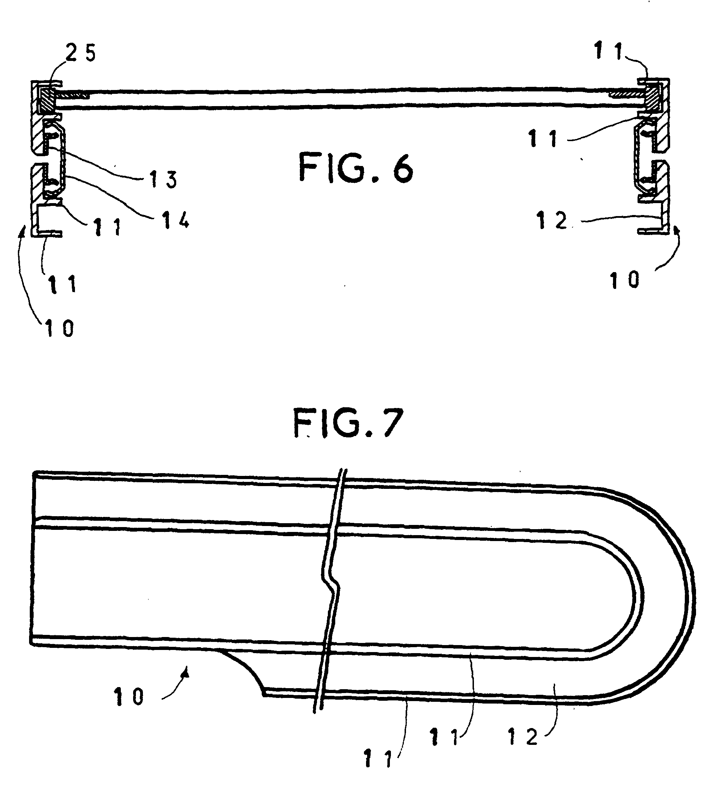

Lorsque les lattes sont emboîtées les unes dans les autres, comme représenté à la figure 5, la nervure 24 d'une latte est engagée entre les nervures 21 et 22 de la latte adjacente, et l'axe de courbure des trois lattes est commun, situé quel que soit l'angle entre les lattes à l'intersection entre les plans des surfaces supérieures des lattes adjacentes.

Il est ainsi possible d'obtenir un débattement angulaire dans les deux sens entre les lattes adjacentes. Il en résulte que les pistes de guidage 12 ne doivent pas nécessairement être rectilignes.

On observera que l'agencement qui vient d'être décrit permet de conserver une distance constante entre les surfaces supérieures des lattes 17, quel que soit l'angle entre les lattes, ce qui présente un intérêt particulier en ce qui concerne l'éventuelle garniture textile du volet roulant.

Chaque latte est fermée à ses extrémités par des bouchons 25, par exemple en matière plastique moulée, empêchant en particulier la pénétration de poussière à l'intérieur du profilé 20.

Les bouchons 25 sont constitués d'une tête 26 susceptible de s'engager et de glisser dans les pistes de guidage 12, et d'une queue 27. La queue 27 possède une forme lui permettant de s'engager dans le profilé 20, et la tête 26, réalisée en matériau antifriction, comporte deux couches de support 28 présentant en section une forme d'osselet. Cette forme assure une rotation régulière du volet roulant dans les parties en courbe des pistes de guidage 12.

Le dispositif selon l'invention comprend en outre une tige de verrouillage 29 dont une extrémité 30 est fixée à une traverse 31 du prolongement 2, et qui traverse le mécanisme de blocage 9.

Le mécanisme 9 est constitué de deux organes de blocage 32 articulés sur un bloc de base 33 autour d'axes 34. Les deux organes 32 sont maintenus écartés par un ressort hélicoïdal 35 et comportent, dans l'axe de ce ressort, chacun un trou 36 susceptible de recevoir la tige 29. Ainsi, en position normale, la tige 29 est bloquée par arc-boutement du fait du désalignement des trous 36 des organes 32.

Un câble non représenté est engagé dans des trous 37 des organes de blocage 32 pour commander le rapprochement des organes contre l'action du ressort 35, sous la commande d'un bouton à la disposition de l'occupant du siège. Il est ainsi possible de libérer le mouvement du prolongement 2 et de régler sa position de façon continue par action directe des pieds de l'occupant sur le repose-pied 15.

Enfin, deux câbles élastiques 38 (du type "Sandow") ont chacun une de leurs extrémités fixée au corps 1 du repose-jambes, et leur autre extrémité fixée au prolongement 2. Chacun de ces câbles passe sur une poulie 39 dont l'axe de rotation est monté sur le prolongement 2. Ces deux câbles élastiques 38 assurent le retrait du prolongement 2 dans le corps 1 du repose-jambes lorsque les moyens de blocage 9 sont déverrouillés et que l'action de l'utilisateur sur le repose-pied 15 cesse.

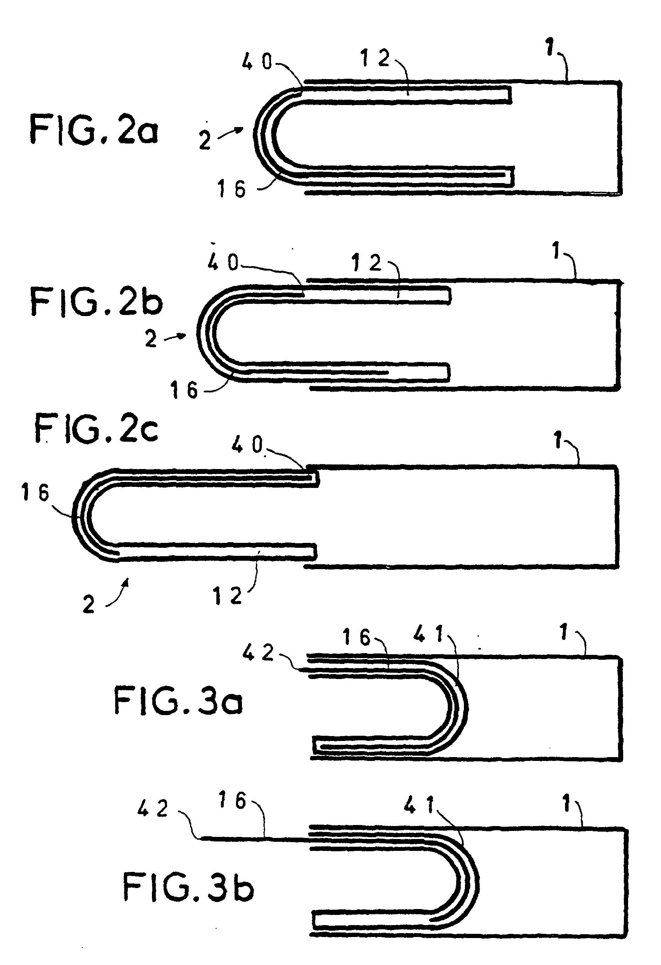

Les figures 2a à 2c illustrent le fonctionnement du dispositif qui vient d'être décrit. La figure 2a représente ce dispositif avec le prolongement 2 escamoté, et la figure 2c avec le prolongement 2 complètement déplié.

On voit sur ces trois figures l'extrémité 40 du volet roulant 16 fixe par rapport au corps 1 du repose-jambes. Au fur et à mesure que le prolongement 2 est extrait du corps 1 du repose-jambes, les bords latéraux du volet roulant 16, en fait les têtes 26 des bouchons 25, glissent dans les pistes de guidage 12, provoquant un déroulement progressif du plan supérieur du volet roulant 16 tandis que son plan inférieur diminue de façon correspondante.

Les figures 3a et 3b illustrent un autre mode de réalisation dans lequel des pistes de guidage 41 fixes par rapport au corps 1 du repose-jambes sont prévues pour le stockage de la partie non utilisée du volet roulant 16. Ce volet roulant 16 a maintenant une extrémité 42 fixe par rapport au prolongement (non représenté dans ces figures).

Les pistes 41 sont également en forme de U mais renversé par rapport aux pistes 12, c'est-à-dire que la base du U est maintenant dirigée vers l'assise du siège. Des pistes non représentées solidaires du prolongement sont prévues à la suite des pistes 41 pour soutenir la partie déployée du volet roulant 16.

En variante, les pistes 41 pourraient se prolonger sous l'assise du siège au lieu de se replier en U. La possibilité qu'a le volet roulant 16 de se plier autorise l'angle variable entre le corps 1 du repose-jambes et l'assise du siège.

On a décrit ci-dessus des modes de réalisation dans lesquels l'extension du repose-jambes et le déploiement du volet roulant sont l'effet de la pression exercée par l'utilisateur sur le repose-pied. Bien entendu une motorisation électrique ou autre pourrait être prévue.

Dans ce dernier cas, il est possible d'asservir les actionneurs des mouvements de pivotement du corps du repose-jambes et de translation du prolongement. On peut ainsi prévoir une logique de déploiement et de repliement permettant en particulier d'éviter les interférences avec le sol ou une paroi verticale.

## Revendications

1. Repose-jambes pour siège, notamment d'avion, avec un corps (1) comportant :
- une surface d'appui (6) généralement plane ;
- des moyens de pivotement (3) pour monter le corps pivotant autour du bord avant de l'assise du siège, de manière que la surface de l'assise du siège et la surface d'appui du corps forment un dièdre d'ouverture variable ;
- des moyens (2) de prolongement mobiles depuis une position escamotée jusqu'à des positions dépliées pour prolonger le corps de façon réglable de son côté opposé aux moyens de pivotement,
**caractérisé en ce qu'**il comprend
- un volet roulant (16) ; et
- des moyens de guidage (12, 25 ; 41) pour déployer le volet roulant lorsque les moyens de prolongement mobiles sont dépliés de sorte que le volet vienne dans le prolongement de la surface d'appui du corps du repose-jambes.

2. Repose-jambes selon la revendication 1, **caractérisé en ce que** les moyens de prolongement mobiles forment un cadre sensiblement en forme de U, avec la base (31) du U sensiblement parallèle au bord de l'assise du siège et dirigée, par rapport au corps du repose-jambes, à l'opposé de l'assise du siège.

3. Repose-jambes selon l'une quelconque des revendications 1 et 2, **caractérisé en ce que** le volet roulant comprend une pluralité de lattes (17) articulées entre elles.

4. Repose-jambes selon l'une quelconque des revendications 1 à 3, **caractérisé en ce que** les moyens de guidage comprennent des pistes de guidages (12 ; 41) agencées pour coopérer avec des organes de guidage (25) disposés latéralement sur le volet roulant.

5. Repose-jambes selon l'ensemble des revendications 3 et 4, **caractérisé en ce que** les lattes sont creuses et les organes de guidage forment des bouchons d'extrémité pour les lattes.

6. Repose-jambes selon l'une quelconque des revendications 4 et 5, **caractérisé en ce que** les organes de guidage sont des organes de friction à section longitudinale sensiblement en forme d'osselets.

7. Repose-jambes selon l'une quelconque des revendications 3 à 6, **caractérisé en ce que** les lattes sont articulées entre elles au moyens de nervures transversales (21, 22, 24), cylindriques et concentriques, coopérantes.

8. Repose-jambes selon la revendication 7, **caractérisé en ce que** les axes des nervures sont situés dans le plan extérieur de support des lattes.

9. Repose-jambes selon l'une quelconque des revendications 1 à 8, **caractérisé en ce que** l'une (40) des extrémités longitudinales du volet roulant est fixe par rapport au corps du repose-jambes, à proximité du bord du repose-jambes opposé à l'assise du siège, le volet roulant étant agencé pour se déployer à partir de cette extrémité.

10. Repose-jambes selon la revendication 9, **caractérisé en ce que** le volet roulant est stocké sous le corps du repose-jambes avec chacun de ses bords latéraux engagé dans une piste de guidage (12) sensiblement en forme de U solidaire des moyens de prolongement mobiles, la base du U étant dirigée par rapport au corps du repose-jambes à l'opposé à l'assise du siège.

11. Repose-jambes selon l'une quelconque des revendications 1 à 8, **caractérisé en ce que** l'une (42) des extrémités longitudinales du volet roulant est fixe par rapport aux moyens de prolongement mobiles, le volet roulant étant agencé pour se déployer entre cette extrémité et le bord du repose-jambes opposé à l'assise du siège.

12. Repose-jambes selon la revendication 11, **caractérisé en ce que** le volet roulant est stocké sous le corps du repose-jambes avec chacun de ses bords latéraux engagé dans une piste de guidage (41) sensiblement en forme de U solidaire du corps du repose-jambes, la base du U étant dirigée par rapport au corps du repose-jambes du côté de l'assise du siège.

13. Repose-jambes selon la revendication 11, **caractérisé en ce que** le volet roulant est stocké partiellement sous le corps du repose-jambes et partiellement sous l'assise du siège, avec chacun de ses bords latéraux engagé dans une piste de guidage solidaire en partie du corps du repose-jambes et en partie de l'assise du siège.

14. Repose-jambes selon l'une quelconque des revendications 1 à 13, **caractérisé en ce qu'**il comprend des moyens de solidarisation (9, 29) pour solidariser le corps du repose-jambes et les moyens de prolongement.

15. Repose-jambes selon la revendication 14, **caractérisé en ce que** les moyens de solidarisation comprennent une tige (29) dont une extrémité est solidaire des moyens de prolongement, et des moyens de blocage (9) de la tige solidaires du corps du repose-jambes

16. Repose-jambes selon la revendication 15, **caractérisé en ce que** les moyens de blocage comprennent deux organes de blocage (32) articulés et munis de trous de passage (36) pour la tige, et des moyens élastiques (35) agencés pour désaligner les trous de passage.

17. Repose-jambes selon l'une quelconque des revendications 1 à 16, **caractérisé en ce qu'**il comprend des glissières complémentaires (13, 14) solidaires respectivement des moyens de prolongement mobiles et du corps de repose-jambes pour un mouvement relatif du corps de repose-jambes et des moyens de prolongement mobiles

18. Repose-jambes selon l'une quelconque des revendications 1 à 17, **caractérisé en ce qu'**il comprend des moyens de rappel (38, 39) pour rappeler les moyens de prolongement mobiles vers leur position escamotée.

19. Repose-jambes selon la revendication 18, **caractérisé en ce que** les moyens de rappel comprennent au moins un câble élastique (38) dont une extrémité est solidaire du corps du repose-jambes et l'autre extrémité est solidaire des moyens de prolongement.

20. Repose-jambes selon la revendication 19, **caractérisé en ce qu'**il comporte au moins une poulie (39) solidaire des moyens de prolongements et dans lequel passe le câble élastique.

21. Siège d'avion **caractérisé par le fait qu'**il comprend un repose-jambes selon l'une quelconque des revendications 1 à 20.

## Patentansprüche

1. Beinstütze für einen Sitz, insbesondere einen Flugzeugsitz, **dadurch gekennzeichnet, dass** sie einen Körper (1) umfasst, mit:
- einer im allgemeinen ebenen Stützfläche (6);
- Drehmitteln (3), um den um die Vorderkante der Sitzfläche des Sitzes drehenden Körper so anzuheben, dass die Oberfläche der Sitzfläche des Sitzes und die Stützfläche des Körpers einen Dieder mit variabler Öffnung bilden;
- mobilen Verlängerungsmitteln (2) ab einer eingeschobenen Position bis zu einer ausgezogenen Position; um den Körper auf seiner den Drehmitteln gegenüberliegenden Seite einstellbar zu verlängern;
- einem Rolladen (16); und
- Führungsmitteln (12, 25 ; 41), um den Rolladen zu entfalten, wenn die mobilen Verlängerungsmittel ausgezogen sind, so dass sich der Rolladen an die Stützfläche des Körpers der Beinstütze anschließt.

2. Beinstütze nach Anspruch 1, **dadurch gekennzeichnet, dass** die mobilen Verlängerungsmittel einen etwa U-förmigen Rahmen bilden, wobei die Basis (31) des U etwa parallel zur Kante der Sitzfläche des Sitzes verläuft und in Bezug auf den Körper der Beinstütze auf die der Sitzfläche des Sitzes gegenüberliegende Seite hin gerichtet ist.

3. Beinstütze nach einem der Ansprüche 1 und 2, **dadurch gekennzeichnet, dass** der Rolladen eine Vielzahl von miteinander gelenkig gelagerten Latten (17) umfasst.

4. Beinstütze nach einem der Ansprüche 1 bis 3, **dadurch gekennzeichnet, dass** die Führungsmittel Führungspisten (12 ; 41) umfassen, die so angebracht sind, dass sie mit seitlich auf dem Rolladen angeordneten Führungsorganen (25) zusammenwirken.

5. Beinstütze nach allen Ansprüchen 3 und 4, **dadurch gekennzeichnet, dass** die Latten hohl sind und die Führungsorgane Endverschlüsse für die Latten bilden.

6. Beinstütze nach einem der Ansprüche 4 und 5, **dadurch gekennzeichnet, dass** die Führungsorgane Reibungsorgane mit einem etwa knöchelchenförmigen Längsschnitt sind.

7. Beinstütze nach einem der Ansprüche 3 bis 6, **dadurch gekennzeichnet, dass** die Latten mittels zylindrischer und konzentrischer zusammenwirkender Querrippen (21, 22, 24) gelenkig miteinander gelagert sind.

8. Beinstütze nach Anspruch 7, **dadurch gekennzeichnet, dass** sich die Achsen der Rippen in der äußeren Tragebene der Latten befinden.

9. Beinstütze nach einem der Ansprüche 1 bis 8, **dadurch gekennzeichnet, dass** eines (40) der Längsenden des Rolladens in Bezug auf den Körper der Beinstütze in der Nähe der der Sitzfläche des Sitzes gegenüberliegenden Kante der Beinstütze fest ist, wobei der Rolladen vorgesehen ist, sich ab diesem Ende zu entfalten.

10. Beinstütze nach Anspruch 9, **dadurch gekennzeichnet, dass** der Rolladen unter dem Körper der Beinstütze gelagert ist, wobei jede seiner Seitenkanten in eine etwa U-förmige Führungspiste (12) der mobilen Verlängerungsmittel eingeführt ist, wobei die Basis des U in Bezug auf den Körper der Beinstütze zu der Sitzfläche des Sitzes gegenüberliegenden Seite hin gerichtet ist.

11. Beinstütze nach einem der Ansprüche 1 bis 8, **dadurch gekennzeichnet, dass** eines (42) der Längsenden des Rolladens in Bezug auf die mobilen Verlängerungsmittel fest ist, wobei der Rolladen vorgesehen ist, sich zwischen diesem Ende und der der Sitzfläche des Sitzes gegenüberliegenden Kante der Beinstütze zu entfalten.

12. Beinstütze nach Anspruch 11, **dadurch gekennzeichnet, dass** der Rolladen unter dem Körper der Beinstütze gelagert ist, wobei jede seiner Seitenkanten in eine etwa U-förmige Führungspiste (41) des Körpers der Beinstütze eingeführt ist, wobei die Basis des U in Bezug auf den Körper der Beinstütze zur Seite der Sitzfläche des Sitzes hin gerichtet ist.

13. Beinstütze nach Anspruch 11, **dadurch gekennzeichnet, dass** der Rolladen teilweise unter dem Körper der Beinstütze und teilweise unter der Sitzfläche des Sitzes gelagert ist, wobei jede seiner Seitenkanten in eine Führungspiste eingeführt ist, die teilweise Bestandteil des Körpers der Beinstütze und teilweise der Sitzfläche des Sitzes ist.

14. Beinstütze nach einem der Ansprüche 1 bis 13, **dadurch gekennzeichnet, dass** sie Befestigungsmittel (9, 29) umfasst, um den Körper der Beinstütze und die Verlängerungsmittel miteinander zu verbinden.

15. Beinstütze nach Anspruch 14, **dadurch gekennzeichnet, dass** die Befestigungsmittel eine Stange (29) umfassen, deren eines Ende Bestandteil der Verlängerungsmittel ist, und Arretiermittel (9) der Stange, die Bestandteil des Körpers der Beinstütze sind.

16. Beinstütze nach Anspruch 15, **dadurch gekennzeichnet, dass** die Arretiermittel zwei gelenkige und mit Durchlasslöchern (36) für die Stange ausgestattete Arretierorgane (32) umfassen, sowie elastische Mittel (35), die so angeordnet sind, dass sie die Durchlasslöcher versetzen.

17. Beinstütze nach einem der Ansprüche 1 bis 16, **dadurch gekennzeichnet, dass** sie zusätzliche Gleitschienen (13, 14) aufweist, die jeweils Bestandteil der mobilen Verlängerungsmittel und des Körpers der Beinstütze sind und eine Relativbewegung des Körpers der Beinstütze und der mobilen Verlängerungsmittel ermöglichen.

18. Beinstütze nach einem der Ansprüche 1 bis 17, **dadurch gekennzeichnet, dass** sie Rückstellmittel (38, 39) umfasst, um die mobilen Verlängerungsmittel wieder in ihre eingeschobene Position zu versetzen.

19. Beinstütze nach Anspruch 18, **dadurch gekennzeichnet, dass** die Rückstellmittel mindestens ein elastisches Seil (38) umfassen, dessen eines Ende Bestandteil des Körpers der Beinstütze und dessen anderes Ende Bestandteil der Verlängerungsmittel ist.

20. Beinstütze nach Anspruch 19, **dadurch gekennzeichnet, dass** sie mindestens eine an den Verlängerungsmitteln befestigte Rolle (39) umfasst, in der das elastische Seil verläuft.

21. Flugzeugsitz **dadurch gekennzeichnet, dass** er eine Beinstütze nach einem der Ansprüche 1 bis 20 umfasst.

## Claims

1. A leg rest for a seat, notably for an aircraft, **characterised in that** it comprises a body (1) having:
- a generally flat support surface (6);
- pivoting means (3) for mounting the body so as to pivot about the front edge of the seat squab, so that the surface of the seat squab and the support surface of the body form a dihedron with variable angles;
- extension means (2) able to move from a retracted position to unfolded positions in order to extend the body adjustably on its side opposite to the pivoting means;
- a roller shutter (16); and
- guidance means (12, 25; 41) for deploying the roller shutter when the movable extension means are unfolded so that the shutter comes in line with the support surface of the body of the leg rest.

2. A leg rest according to Claim 1, **characterised in that** the movable extension means form a frame substantially in a U shape, with the base (31) of the U substantially parallel to the edge of the seat squab and directed, with respect to the body of the leg rest, in the direction opposite the seat squab.

3. A leg rest according to either one of Claims 1 and 2, **characterised in that** the roller shutter comprises a plurality of slats (17) articulated on each other.

4. A leg rest according to any one of Claims 1 to 3, **characterised in that** the guidance means comprise guidance tracks (12; 41) arranged to cooperate with guidance members (25) disposed laterally on the roller shutter.

5. A leg rest according to Claims 3 and 4 together, **characterised in that** the slats are hollow and the guidance members form end plugs for the slats.

6. A leg rest according to either one of Claims 4 and 5, **characterised in that** the guidance members are friction members with a longitudinal section substantially in the shape of a knucklebone.

7. A leg rest according to any one of Claims 3 to 6, **characterised in that** the slats are articulated on each other by means of cooperating transverse ribs (21, 22, 24), cylindrical and concentric.

8. A leg rest according to Claim 7, **characterised in that** the axes of the ribs are situated in the external support plane of the slats.

9. A leg rest according to any one of Claims 1 to 8, **characterised in that** one (40) of the longitudinal ends of the roller shutter is fixed with respect to the body of the leg rest, close to the edge of the leg rest opposite the seat squab, the roller shutter being arranged so as to be deployed from this end.

10. A leg rest according to Claim 9, **characterised in that** the roller shutter is stored underneath the body of the leg rest with each of its lateral edges engaged in a guidance track (12) substantially in the shape of a U fixed to the movable extension means, the base of the U being directed, with respect to the body of the leg rest, in the direction opposite the seat squab.

11. A leg rest according to any one of Claims 1 to 8, **characterised in that** one (42) of the longitudinal ends of the roller shutter is fixed with respect to the movable extension means, the roller shutter being arranged so as to be deployed between this end and the edge of the leg rest opposite the seat squab.

12. A leg rest according to Claim 11, **characterised in that** the roller shutter is stored underneath the body of the leg rest with each of its lateral edges engaged in a guidance track (41) substantially in the shape of a U fixed to the body of the leg rest, the base of the U being directed with respect to the body of the leg rest on the same side as the seat squab.

13. A leg rest according to Claim 11, **characterised in that** the roller shutter is stored partially underneath the body of the leg rest and partially underneath the seat squab, with each of its lateral edges engaged in a guidance track fixed partly to the body of the leg rest and partly to the seat squab.

14. A leg rest according to any one of Claims 1 to 13, **characterised in that** it comprises connection means (9, 29) for connecting the body of the leg rest and the extension means.

15. A leg rest according to Claim 14, **characterised in that** the connection means comprise a rod (29), one end of which is fixed to the extension means, and means (9) of locking the rod fixed to the body of the leg rest.

16. A leg rest according to Claim 15, **characterised in that** the locking means comprise two articulated locking members (32) provided with passage holes (36) for the rod, and elastic means (35) arranged to put the passage holes out of alignment.

17. A leg rest according to any one of Claims 1 to 16, **characterised in that** it comprises complementary runners (13, 14) fixed respectively to the movable extension means and the leg rest body for a relative movement of the leg rest body and the movable extension means.

18. A leg rest according to any one of Claims 1 to 17, **characterised in that** it comprises return means (38, 39) for returning the movable extension means to their retracted position.

19. A leg rest according to Claim 18, **characterised in that** the return means comprise at least one elastic cable (38), one end of which is fixed to the body of the leg rest and the other end of which is fixed to the extension means.

20. A leg rest according to Claim 19, **characterised in that** it has at least one pulley (39) fixed to the extension means and through which the elastic cable passes.

21. An aircraft seat **characterised by** the fact that it comprises a leg rest according to any one of Claims 1 to 20.
